# EUROPÄISCHE PATENTANMELDUNG

(11) **EP 2 028 102 A1**
(43) Veröffentlichungstag der Anmeldung: **25.02.2009**
(21) Anmeldenummer: 07747852.7
(22) Anmeldetag: 09.03.2007
(51) Int. Cl.: B64C 11/20, B63H 1/14, F03D 1/00

(54) **SHPADI-PROPELLER (VARIANTEN) UND DIE EVOLVENTE SEINER SCHAUFELN**

(30) Priorität: 28.03.2006 RU 2006109976
(71) Anmelder: Zakrytoe Aktzionernoe Obshcestvo "Aviastroitel' Naya Korporatziya 'Rusich', Kazan 420085 (RU); Obshcestvo S Ogranichennoi Otvetstvennost'yu `Multikar`, Ulyanovsk 432047 (RU); Zakrytoe Aktzionernoe Obshcestvo 'Aviatroitel' Naya Korporatziya 'Aviator', Moskovskaya obl. 141770 (RU)
(72) Erfinder: SHPADI, Andrei Leonidovich, Uliyanovsk, 432071 (RU); TIMOFEEV, Vladimir Fedorovich, Uliyanovsk, 432027 (RU); USHKOV, Aleksandr Borisovich, Uliyanovsk, 432074 (RU); TALOV, Aleksandr Aleksandrovich, Kazan, 420039 (RU)
(74) Vertreter: Jeck, Anton
(86) Internationale Anmeldenummer: PCT/RU2007/000121
(87) Internationale Veröffentlichungsnummer: WO 2007/111532

(57) **Zusammenfassung**

Die Erfindung betrifft einen Propeller mit säbelförmigen Flügeln, deren Anfangsabschnitte an der Nabe der Antriebswelle befestigt sind. Das Festigungsverfahren der Propellerflügel wird vereinfacht und die Größe der Flügel reduziert bei Abnahme des Materialaufwandes und Erhöhung der Schubleistung, wenn die Ausgestaltung so ausgeführt wird, dass die Anfangsabschnitte der Flügel jeweils positiv säbelförmig ausgebildet sind, wobei die Vorderkante der Flügel nach hinten zur Drehrichtung und zur Drehungsebene abgebogen sind, dass diese Vorderkanten nahtlos in negativ säbelförmige Endabschnitte übergehen, wobei die Vorderkanten der Flügel nach vorne zur Drehrichtung und zur Drehungsebene abgebogen sind, dass die Flügel entlang der Propellerachse so gewunden sind, dass eine stufenlose Änderung des Anlaufwinkels über den gesamten Flügel sichergestellt ist und dass die Endabschnitte der Flügel an der Propellerachse befestigt sind, wobei die Anfangsabschnitte und die Endabschnitte unter verschiedenen Anlaufwinkein befestigt sind. Eine weitere Vereinfachung ergibt sich **dadurch**, dass die Flügel als einheitliche unteilbare flache Figur hergestellt werden.

## Beschreibung

Die Erfindung bezieht sich auf einen Propeller nach dem Oberbegriff des Anspruches 1 und eine Abwicklung des Propellerflügels nach dem Oberbegriff des Anspruches 14.

Der Propeller kann zur Umwandlung der mechanischen Energie im flüssigen Medium, nämlich in der Flüssigkeit oder im Gas verwendet werden. Er kann als Schiffsschraube, Luftschraube für Motoren und Vortriebsorgane für Schiffe, Flugzeuge (Luftschiffe), Windanlagen, Haushaltlüfter und andere Haushaltgeräte, Spielzeuge und sonstige Gegenstände eingesetzt werden.

Es ist ein Laufrad für den Motor im flüssigen Medium bekannt, welches einen elektrischen bandförmigen Flügel mit einseitiger Möbius-Oberfläche aufweist, die an Radialstäben senkrecht zur Antriebswelle befestigt ist (Urheberschein der UdSSR Nr. 1305430, IPC FO3D1/06, veröffentlicht 30.09.1985).

Diese bekannte Vorrichtung hat jedoch einen komplizierten Aufbau und einen unzureichend hohen Wirkungsgrad. Sie erzeugt auch einen großen Lärm, der durch die Radialstäbe bedingt ist. Die Radialstäbe sind nicht an der Erzeugung von unklaren aerodynamischen Kräften befestigt.

Als leistungsfähig gelten zurzeit mehrflügelige Schrauben mit säbelförmigen Flügeln, die freitragend befestigt sind. Die nicht befestigten Flügelenden sind nach hinten zur Drehrichtung und zur Drehungsebene abgebogen (Urheberschein Nr. 1711664 IPC B64C11/00, veröffentlicht 24.10.1986). Derartige Schrauben sind jedoch nicht sicher genug und durch hohe Fertigungsschwierigkeit gekennzeichnet, was durch die einseitige freitragende Befestigung der säbelförmigen Flügel mit großer Verlängerung und Krümmung bedingt ist. Weitere Mängel der bekannten Schrauben sind der hohe Geräuschpegel beim Betrieb, der niedrigere Wirkungsgrad pro Flügelflächeneinheit sowie das hohe Gewicht und die große Abmessung der Konstruktion. Der Propeller (Ausführungsform 1) enthält säbelförmige Flügel, deren Anfangsabschnitte an der Nabe der Antriebswelle befestigt sind. Die Neuheit besteht darin, dass der Propeller mindestens zwei Flügel aufweist, deren Anfangsabschnitte jeweils positiv säbelförmig sind. Dabei ist die Vorderkante des Flügels nach hinten zur Drehrichtung und zur Drehungsebene abgebogen. Diese Vorderkante geht nahtlos in den negativ säbelförmigen Endabschnitt über. Dabei ist die Vorderkante des Flügels nach vorne zur Drehrichtung und zur Drehungsebene gebogen. Die Flügel sind entlang der Propellerachse angeordnet und ihre Endabschnitte sind so zusammengefügt, dass eine axial symmetrische Figur gebildet ist.

Der Propeller (nach der 2. Ausführungsform) weist säbelförmige Flügel auf, deren Anfangsabschnitte an der Nabe der Antriebswelle befestigt sind. Die Neuheit besteht darin, dass der Propeller drei und mehr Flügel aufweist, deren Anfangsabschnitte jeweils positiv säbelförmig sind. Dabei ist die Vorderkante des Flügels nach hinten zur Drehrichtung und zur Drehungsebene abgebogen. Diese Vorderkante geht nahtlos in den säbelförmigen Endabschnitt über. Dabei ist die Vorderkante des Flügels nach vorne zur Drehrichtung und zur Drehungsebene gebogen. Die Flügel sind entlang der Propellerachse angeordnet und ihre Endabschnitte so zusammengefügt, dass eine axialsymmetrische Figur gebildet ist. Dabei sind die Anfangs- und Endabschnitte jedes Flügels unter vorgegebenen Anlaufwinkeln befestigt. Die Endabschnitte der Flügel sind mittels eines Ringansatzes miteinander verbunden.

Bei einem Motor ist der Anfangsabschnitt im Anlaufwinkel jedes Flügels größer als die Anlaufwinkel des Endabschnittes des jeweiligen Flügels. Bei einem Vertriebsorgan (Propeller) ist der Anlaufwinkel des Anfangsabschnittes jedes Flügels kleiner als der Anlaufwinkel des Endabschnittes des jeweiligen Flügels. Die Gesamtheit der Bahnen aller Flügelaußenkanten bildet eine Flügelfläche aus, die vorwiegend oval und entlang der Propellerachse gestreckt ist.

Der Propeller (nach der 3. Ausführungsform) weist säbelförmige Flügel auf, deren Anfangsabschnitte an der Nabe der Antriebswelle befestigt sind. Die Neuheit besteht darin, dass der Propeller zwei Flügel aufweist, deren Anfangsabschnitte jeweils positiv säbelförmig sind. Dabei ist die Vorderkante des Flügels nach hinten zur Drehrichtung und zur Drehungsebene abgebogen. Diese Vorderkante geht nahtlos in den negativ säbelförmigen Endabschnitt über. Dabei ist die Vorderkante des Flügels nach vorne zur Drehrichtung und zur Drehungsebene gebogen. Die Flügel sind entlang der Propellerachse angeordnet und ihre Endabschnitte sind so zusammengefügt, dass eine axialsymmetrische Figur gebildet ist. Dabei sind die Endabschnitte der Flügel zu einer untrennbaren Einheit zusammengefügt und stellen einen nahtlosen Übergang zwischen den Oberflächen beider Flügel sicher. Die beiden Flügel bilden eine einheitliche einseitige Oberfläche mit einfacher Knickung aus. Dabei sind die Oberflächen des Anfangs- und des Endabschnittes bei jedem Flügel um 90° zueinander an ihren Befestigungsstellen gewendet. Die Propellerachse und die Oberfläche der Endabschnitte beider Flügel liegen in einer Ebene. Die Gesamtheit der Bahnen aller Flügelaußenkanten bildet eine Flügelfläche aus, die drehungsmäßig vorwiegend oval und entlang der Propellerachse gestreckt ist.

Die Endabschnitte der Flügel sind direkt miteinander verbunden oder sie sind mittels eines Ringansatzes bzw. der Antriebswelle miteinander verbunden.

Die Abwicklung der Propellerflügel ist dadurch gekennzeichnet, dass die Gesamtheit der Propellerflügel eine einheitliche untrennbare Flachfigur darstellt. Diese Figur besteht mindestens aus zwei spiralförmigen Teilen, die eine Symmetriefigur bilden. Die Symmetriefigur weist eine oder mehrere Bohrungen für das Passmaß der Nabe der Propeller-Antriebswelle auf. Die spiralförmigen Teile haben Axialbohrungen für das Passmaß der Nabe der Propeller-Antriebswelle.

Am offenen Ende haben die spiralförmigen Teile der Abwicklung Bohrungen für das Passmaß der Nabe der Propeller-Antriebswelle.

Die Abwicklung aus zwei spiralförmigen Teilen steht eine Doppelfokusspirale dar. Die Spirale ist symmetrisch in Bezug auf die Linie, die senkrecht zur Flachfigurenkantentangente im mittleren Teil der Flachfigur verläuft. An den offenen Enden haben die spiralförmigen Teile Bohrungen für das Passmaß der Nabe der Propeller-Antriebswelle.

Ausgehend von dem obigen Stand der Technik liegt der Erfindung die Aufgabe zugrunde, einen Propeller zu schaffen, bei dem das Fertigungsverfahren vereinfacht ist und eine Größenreduzierung der Flügel erreicht ist, die zur Abnahme des Materialaufwandes unter gleichzeitiger Erhöhung der Schubleistung führt, ohne dass die Fertigkeit und der Nutzeffekt abnehmen.

Die gestellte Aufgabe wird durch die Merkmale der Ansprüche 1, 3 und 9 gelöst.

Weitere zweckmäßige und vorteilhafte Maßnahmen der drei Ausführungsarten sind den Unteransprüchen 2, 4 bis 8 und 10 bis 13 zu entnehmen. Außerdem ist die Erfindung in den Unteransprüchen 14 bis 20 beansprucht, die die Abwicklung der Propellerflügel unter Schutz stellt.

Die Erfindung wird anhand von Ausführungsbeispielen in den Zeichnungen näher erläutert. Es zeigen:
- Fig. 1: einen dreiflügeligen Propeller,
- Fig. 2: die Axialansicht des dreiflügeligen Propellers nach Fig. 1,
- Fig. 3 bis 6: zweiflügelige Propeller mit verschiedenen Arten der Zusammenfügung der Flügelenden,
- Fig. 7: die Axialansicht des zweiflügeligen Propellers und
- Fig. 8 bis 12: Beispiele für die Flachabwicklungen der Propellerflügel nach den beiden Ausführungsformen.

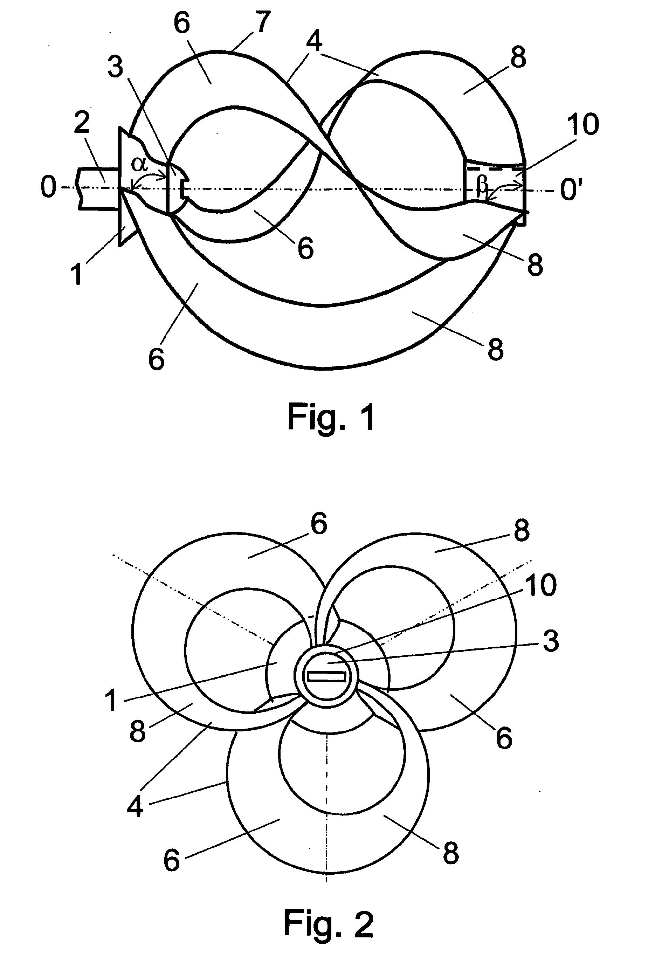

Der vorgeschlagene Propeller für Motoren und Vortriebsorgane in einem flüssigen Medium weist eine Nabe 1 mit einer Antriebswelle 2, eine Befestigungsschraube 3 und säbelförmige Flügel 4 auf. Die Nabe 1 oder die Flügel 4 sind mittels einer Axialbohrung 5 an der Antriebswelle 2 angeordnet und zwar so, dass der Anfangsabschnitt 6 des Flügels 4 positiv säbelförmig ausgebildet und der Anlaufwinkel α sichergestellt ist. Die positive Säbelförmigkeit ist dadurch gekennzeichnet, dass die Vorderkante 7 in Bezug auf die Drehrichtung und die Drehungsebene nach hinten abgebogen ist und der konventionellen Fertigung der säbelförmigen Flügel 4 entspricht. Der positiv säbelförmige Anfangsabschnitt 6 geht nahtlos in den negativ säbelförmigen Endabschnitt 8 über. Dadurch wird eine solche Form des Flügels 4 gebildet, bei der die Vorderkante 7 des Flügels 4 in Bezug auf die Drehrichtung und die Drehungsebene nach vorne gebogen ist (Fig. 1 und 2). Die Flügel 4 sind durch ihren Endabschnitt 8 auf eine beliebige bekannte Art fest miteinander verbunden. Dabei wird der Anlaufwinkel β der Endabschnitte 8 der Flügel 4 gebildet. Dieser Winkel β unterscheidet sich vom Anlaufwinkel α der Anfangsabschnitte 6 infolge der verfahrenstechnischen Möglichkeiten (Verschraubung mittels Bohrungen 9 am Ende der Flügel 4; Schweißen; Vernietung mittels eines ringförmigen Hilfsansatzes 10).

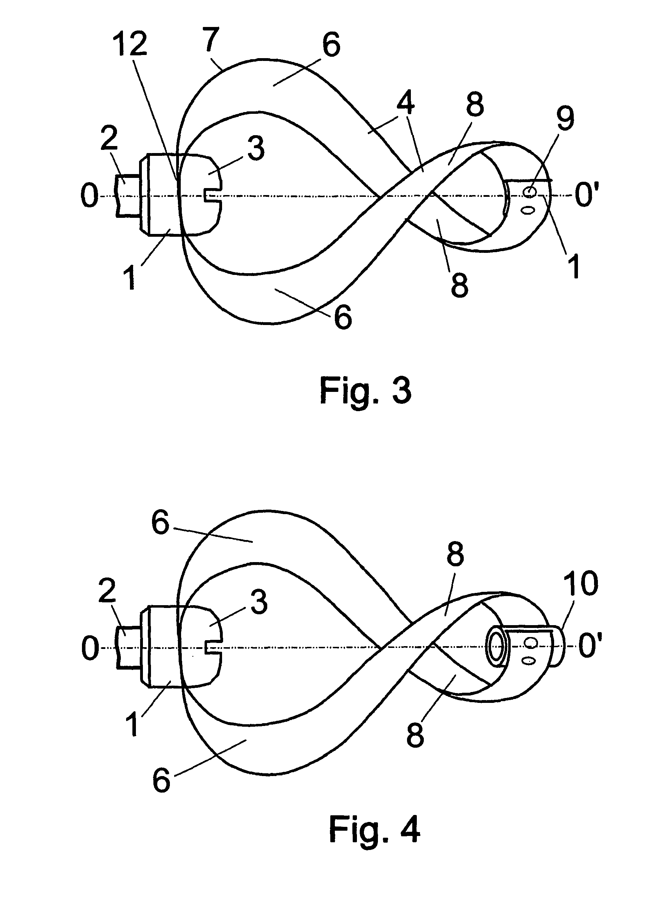

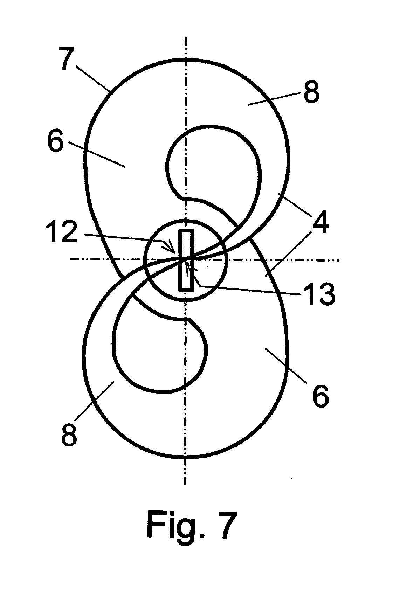

Beim zweiflügeligen Propeller sind die Anfangsabschnitte 6 der Flügel 4 mittels Bohrungen 5 auf die Nabe 1 aufgesetzt und durch die Schraube 3 befestigt. Die Oberflächen 12 der Flügel 4 sind an ihren Befestigungsstellen an der Nabe 1 senkrecht zur Propellerachse angeordnet. Die Oberflächen 13 der Flügel 4 sind an ihren Befestigungsstellen untereinander um 90° zu den Oberflächen 12 gewendet. Die Oberflächen 13 liegen in derselben Ebene mit der Propellerachse und sind fest miteinander verbunden, so dass eine symmetrische Figur ausgebildete wird. die Oberflächen 13 der Flügel 4 werden z. B. aufeinander gelegt und mittels Punktschweißen (Fig. 3 und 7) zusammengefügt.

Die Zusammenfügung der Endabschnitte 8 der Flügel 4 stellt eine feste und starre Konstruktion dar. Dabei werden dünne Stahlbleche, Kunststoff, Verbundwerkstoffe angewendet. Die Form der Flügel 4 mit einem nahtlosen Übergang zwischen ihren Oberflächen verändert stufenlos den Anlaufwinkel und den Widerstand der Anlaufströmung des flüssigen Mediums vom Maximum auf ein Minimum an den Enden der Flügel 4. Eine solche Neuverteilung der Strömung stellt eine Wirkungsgraderhöhung innerhalb eines breiten Geschwindigkeitsbereiches gegenüber den bekannten Vorrichtungen mit gleichem Verwendungszweck sicher.

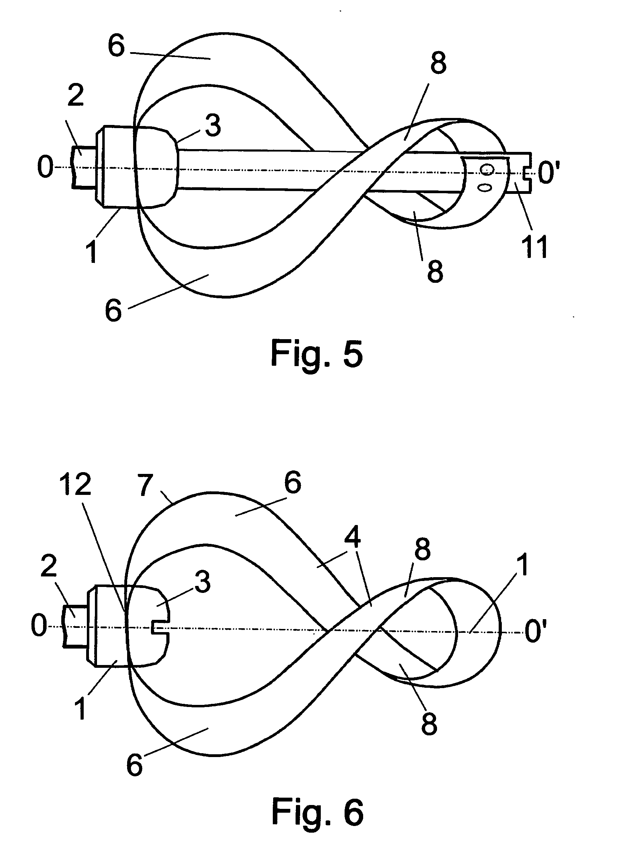

Beim Zusammenbau des zweiflügeligen Propellers können die Endabschnitte 8 der Flügel 4 mittels des Ringansatzes 10 oder einer Wellenverlängerung 11 entlang der Propellerachse befestigt werden. Dadurch wird der Zugriff auf die Halterung der Flügel 4 an der Nabe 1 vereinfacht. Die Größe der Befestigungselemente beeinflusst die Aerodynamik der Flügel 4 nicht (Fig. 4 und 5).

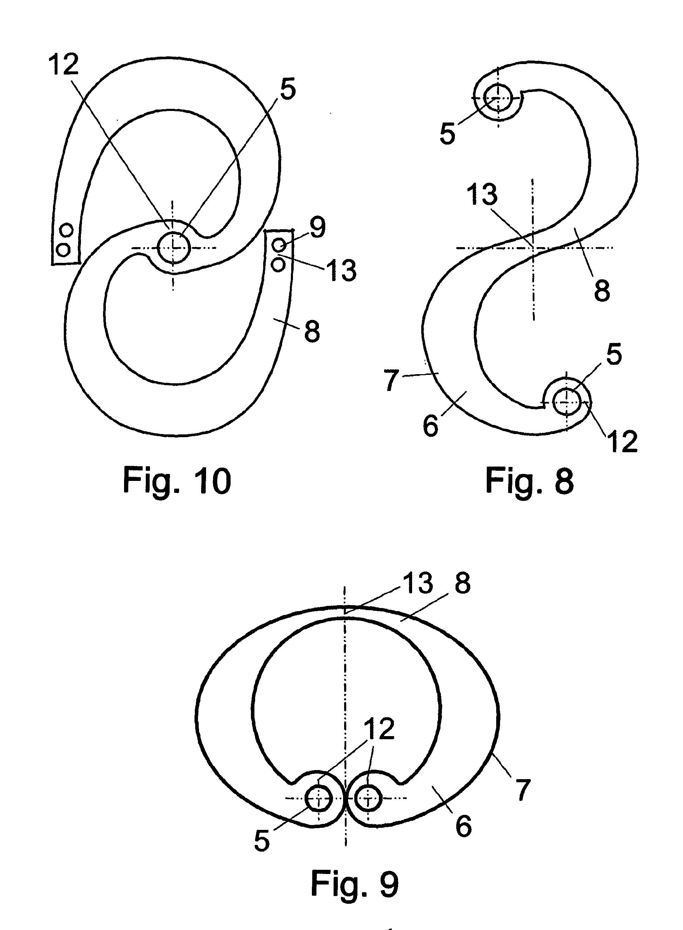

Bei einer direkten Verbindung der Endabschnitte 8 beider Flügel 4 bilden die Flügel 4 die Möbius-Oberfläche. Folglich können beide Flügel 4 des Propellers durch eine einfache Knickung von einem flachen spiralförmigen Bauteil mit Bohrungen an seinen Enden zur Befestigung des Bauteils an der Nabe 1 erzeugt werden, so dass zwei Flügel 4 gebildet werden (Fig. 6). Die Konstruktion eines solchen Flügels 4 wird anhand der Abwicklung in den Fig. 8 und 9 veranschaulicht. In Fig. 8 besteht der flache Teil aus zwei spiralförmigen Elementen, die eine axialsymmetrische Figur mit Bohrungen 5 bilden. Die Bohrungen 5 sind an den offenen Enden des spiralförmigen Teils für das Passmaß der Nabe 1 der Antriebswelle 2 des Propellers angeordnet. In Fig. 9 ist die flache Abwicklung des zweiflügeligen Propellers abgebildet, die aus zwei spiralförmigen Teilen als Doppelfokusspirale besteht. Die Spirale ist symmetrisch in Bezug auf die Linie, die senkrecht zur Flachfigurkantentangente im mittleren Teil der Flachfigur verläuft. Die Bohrungen 5 sind an den offenen Enden der spiralförmigen Teile für das Passmaß der Nabe 1 der Antriebswelle 2 des Propellers ausgeführt.

Eine ähnliche Konstruktion des Propellers kann aus einem flachen Bauteil gefertigt werden, dessen Abwicklung in Fig. 10 gezeigt ist. Die Abwicklung besteht aus zwei spiralförmigen Teilen, die eine axialsymmetrische Figur mit Axialbohrungen 5 für das Passmaß der Nabe 1 der Antriebswelle 2 des Propellers ausbilden. Die Bohrungen 9 an den Enden der Fig. 10 dienen zum Zusammenfügen der Endabschnitte 8 der Flügel 4 miteinander.

Die spiralförmige Oberfläche der Flügel 4 stellt Folgendes sicher:
- die Form der Flügel mit einer stufenlosen Veränderung des Anlaufwinkels,
- die Konstruktionsfertigkeit der Flügel,
- die Größenreduzierung und die Gewichtsabnahme des Propellers bei gleichzeitiger Steigerung des Wirkungsgrades und die Sicherstellung von einem praktisch geräuschlosen Betrieb und
- eine Verminderung des Durchmessers des Propellers.

Bei einem dreiflügeligen Propeller (Fig. 1) werden die Endabschnitte 8 der Flügel 4 ebenfalls koaxial neben der Propellerachse mittels des Ringansatzes 10 vereinigt. Der Ringansatz 10 vereinfacht zum einen den Zugriff auf die Halterungen der Nabe 1 (Fig. 2) und zum anderen beeinflusst sein Einsatz praktisch nicht die Aerodynamik der Flügel 4. Der Ringansatz 10 ermöglicht auch die Endabschnitte 8 der Flügel 4 unter einem bestimmten Anlaufwinkel zu befestigen. Die Wahl des Anlaufwinkels entspricht der gängigen Praxis. Unter Berücksichtigung der Art der Energieumwandlung zum Beispiel vom Flügel 4 an die Antriebswelle 2, wie beim Aeromotor oder bei der Übertragung der Rotation an die Flügel 4 kann der dreiflügelige Propeller den Anlaufwinkel α > β oder β > α aufweisen, wobei α der Anlaufwinkel des Anfangsabschnittes 6 der Flügel 4 und β der Anlaufwinkel des Endabschnittes 8 des Flügels 4 sind.

### Der Propeller funktioniert folgenderweise:

Beim Drehen der Antriebswelle 2 und der Nabe 1 fangen die Anfangsabschnitte 6 mit direkter Pfeilung der Flügel 4 an, mit dem flüssigen Medium zusammenzuwirken. Ihr Anlaufwinkel ist kleiner als der bei den Endabschnitten 8 mit negativer Pfeilungsform (α < β). Dadurch kommt die stoßlose Beschleunigung des umgebenden flüssigen Mediums zustande. Dabei wird die höchste Geschwindigkeit nur am Ausgang aus der Vorrichtung an den Enden der Flügel 4 erreicht. Die Gesamtheit der Bahnen der Außenbauten der Flügel 4 bildet vorwiegend die ovale Figur aus, die entlang der Propellerachse gestreckt ist. Je größer die axiale Verlängerung des Propellers, desto stoßloser die Beschleunigung des Mediums, die durch den Propeller erzeugt wird. Die Flügel 4 sind an beiden Enden befestigt. Die Anfangsabschnitte 6 sind an der Nabe 1 befestigt und die Endabschnitte 8 sind miteinander gekoppelt. Deswegen wird die Konstruktion ziemlich leicht und starr, trotz großer Verlängerung entlang der Drehachse O-O'. Die Verlängerung stellt einen etwas verteilten Druckgradient im flüssigen Medium und folglich auch einen geringen Geräuschpegel sowie ein niedrigeres Niveau von Kavitation und Turbulenz sicher. Dies erhöht wesentlich den Wirkungsgrad und beeinflusst positiv den allgemeinen technischen Nutzeffekt der vorgeschlagenen Propeller.

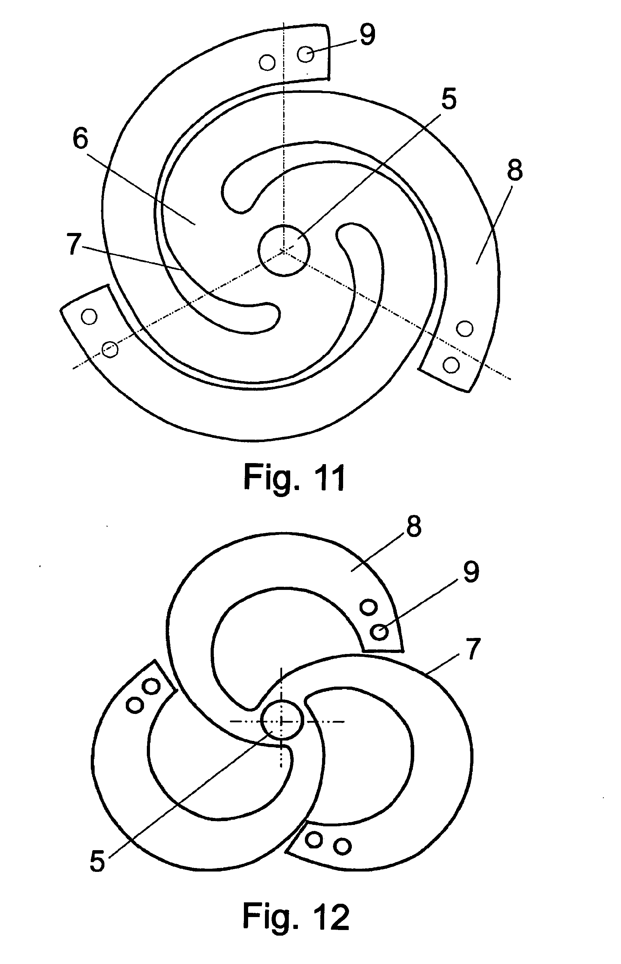

Die Propeller können nach einem beliebigen bekannten technischen Verfahren, z. B. Gießen, Schmieden, gefertigt werden. Der dreiflügelige Propeller kann fertigungstechnisch aus einem dünnen flachen Blechmaterial, z. B. aus Stahl (Fig. 11 und 12), gefertigt werden. Dieses gefertigte Bauteil stellt eine einheitliche, ungeteilte Flachfigur dar, welche aus spiralförmigen Teilen besteht. Diese Teile bilden eine axialsymmetrische Figur mit einer Axialbohrung 5 für das Passmaß der Nabe 1 der Antriebswelle 2 des Propellers und mit Befestigungsbohrungen 9 aus. Als erzeugende Spiralen können Archimedes-Spiralen, hyperbolische und logarithmische Spiralen, Evolventen, Zykloiden und andere geeignete Kurven verwendet werden. Sie werden je nach Anwendung der vorgeschlagenen Propeller gewählt.

Die angeführten Angaben wurden durch Feldversuche an Versuchsmustern der Haushaltlüfter auf der Basis von flachen Abwicklungen (Fig. 9, 10 und 11) nachgewiesen, welche einen eng fokussierten Luftstrahl mit geringem Geräuschpegel bis zu 6000 U/min und geringe Produktionskosten sicherstellen. Diese Kosten kann sich eine beliebige Privatwerkstatt und folglich auch solche Werke leisten, die mit der Herstellung von geräuscharmen Schraubenpropellern für U-Boote, Windkraftanlagen, Flugzeugen u.s.w. beschäftigt sind.

## Patentansprüche

1. Propeller mit säbelförmigen Flügeln, deren Anfangsabschnitte an der Nabe der Antriebswelle befestigt sind,
**dadurch gekennzeichnet,**
**dass** die Anfangsabschnitte (6) der Flügel (4) jeweils positiv säbelförmig ausgebildet sind, wobei die Vorderkante (7) der Flügel (4) nach hinten zur Drehrichtung und zur Drehungsebene abgebogen sind,
**dass** diese Vorderkanten (7) nahtlos in negativ säbelförmige Endabschnitte (8) übergehen, wobei die Vorderkanten (7) der Flügel (4) nach vorne zur Drehrichtung und zur Drehungsebene abgebogen sind und
**dass** die Flügel (4) entlang der Propellerachse angeordnet und mittels Endabschnitte (8) befestigt sind, so dass eine achssymmetrische Figur gebildet wird.

2. Propeller mit säbelförmigen Flügeln, deren Anfangsabschnitte an der Nabe der Antriebswelle befestigt sind,
**dadurch gekennzeichnet,**
**dass** er drei und mehr Flügel (4) aufweist, deren Anfangsabschnitte (6) jeweils positiv säbelförmig ausgebildet sind,
**dass** der Anfangsabschnitt (6) jedes Flügels (4) jeweils positiv säbelförmig ausgebildet sind, wobei die Vorderkante (7) der Flügel (4) nach hinten zur Drehrichtung und zur Drehungsebene abgebogen sind,
**dass** diese Vorderkanten (7) nahtlos in negativ säbelförmige Endabschnitte (8) übergehen, wobei die Vorderkanten (7) der Flügel (4) nach vorne zur Drehrichtung und zur Drehungsebene abgebogen sind,
**dass** die Flügel (4) entlang der Propellerachse angeordnet und mittels Endabschnitte (8) befestigt sind, so dass eine achssymmetrische Figur gebildet wird, wobei die Anfangsabschnitte (6) und die Endabschnitte (8) unter vorgegebenen Anlaufwinkeln (α, β) befestigt sind.

3. Propeller nach Anspruch 2,
**dadurch gekennzeichnet,**
**dass** die Endabschnitte (8) der Flügel (4) mittels eines Ringansatzes (10) miteinander verbunden sind.

4. Propeller nach Anspruch 2,
**dadurch gekennzeichnet,**
**dass** der Anlaufwinkel (α) des Anfangsabschnittes (6) jedes Flügels (4) beim Motor größer als der Anlaufwinkel (β) des Endabschnittes (8) des jeweiligen Flügels (4) ist.

5. Propeller nach Anspruch 2,
**dadurch gekennzeichnet,**
**dass** der Anlaufwinkel (α) des Anfangsabschnittes (6) jedes Flügels (4) beim Vortriebsorgan (Propeller) kleiner als der Anlaufwinkel (β) des Endabschnittes (8) des jeweiligen Flügels (4) ist.

6. Propeller nach Anspruch 2,
**dadurch gekennzeichnet,**
**dass** die Gesamtheit der Bahnen aller Flügelaußenkanten eine Flügelfläche ausbildet, die vorwiegend oval und entlang der Propellerachse gestreckt ist.

7. Propeller mit säbelförmigen Flügeln (4), deren Anfangsabschnitte (6) an der Nabe (1) der Antriebswelle (2) befestigt sind,
**dadurch gekennzeichnet,**
**dass** der Propeller zwei Flügel (4) mit positiv säbelförmigen Anfangsabschnitten (6) aufweist,
**dass** die Vorderkanten (7) der Flügel (4) nach hinten zur Drehrichtung und zur Drehungsebene gebogen sind,
**dass** diese Vorderkanten (7) nahtlos in negativ säbelförmige Endabschnitte (8) übergehen, wobei die Vorderkanten (7) der Flügel (4) nach vorne zur Drehrichtung und zur Drehungsebene gebogen sind,
**dass** die Flügel (4) entlang der Propellerachse angeordnet und mittels Endabschnitte (8) so befestigt sind, dass sie eine axialsymmetrische Figur bilden,
**dass** Endabschnitte (8) der Flügel (4) ein Ganzes bilden und einen nahtlosen Übergang zwischen den Oberflächen beider Flügel sicherstellen, und zwar so, dass die beiden Flügel eine einseitige Möbius-Oberfläche mit einfacher Knickung bilden,
**dass** die Oberflächen der Anfangsabschnitte (6) und der Endabschnitte (8) jedes Flügels (4) um 90° zueinander an ihren Befestigungsstellen gerundet sind und
**dass** die Propellerachse und die Oberfläche der Endabschnitte (8) beider Flügel in einer Ebene liegen.

8. Propeller nach Anspruch 7,
**dadurch gekennzeichnet,**
**dass** die Gesamtheit der Bahnen aller Flügelaußenkanten eine Flügelfläche ausbildet, die vorwiegend oval und entlang der Propellerachse gestreckt ist.

9. Propeller nach Anspruch 7,
**dadurch gekennzeichnet,**
**dass** die Endabschnitte (8) der Flügel (4) direkt miteinander verbunden sind.

10. Propeller nach Anspruch 7,
**dadurch gekennzeichnet,**
**dass** die Endabschnitte (8) der Flügel (4) mittels eines Ringansatzes (10) oder der Antriebswelle (2) miteinander verbunden sind.

11. Abwicklung der Propellerflügel,
**dadurch gekennzeichnet,**
**dass** die Abwicklung der Flügel (4) des Propellers eine einheitliche unteilbare flache Figur darstellt und
**dass** diese Figur aus mindestens zwei spiralförmigen Teilen besteht, die eine Symmetriefigur mit einer oder mehreren Bohrungen (5) für das Passmaß der Nabe (1) der Antriebswelle (2) des Propellers bildet.

12. Abwicklung nach Anspruch 11,
**dadurch gekennzeichnet,**
**dass** die spiralförmigen Teile Axialbohrungen für das Passmaß der Nabe der Antriebswelle (2) des Propellers aufweisen.

13. Abwicklung nach Anspruch 11,
**dadurch gekennzeichnet,**
**dass** die Bohrungen an den offenen (nicht geschlossenen) Enden der spiralförmigen Teile für das Passmaß der Nabe (1) der Antriebswelle ausgebildet sind.

14. Abwicklung nach Anspruch 11,
**dadurch gekennzeichnet,**
**dass** die Oberfläche aus zwei spiralförmigen Teilen eine Doppelfokusspirale darstellt,
**dass** die Spiralen symmetrisch in Bezug auf die Linie sind, welche senkrecht zur Flachfigurenkantentangente im mittleren Teil der Flachfigur verläuft und dass die Bohrungen (9) an den Enden der spiralförmigen Teile für das Passmaß der Nabe (1) der Antriebswelle des Propellers ausgebildet sind.
